# EUROPEAN PATENT APPLICATION

(11) **EP 4 826 749 A1**
(43) Date of publication of application: **21.10.2026**
(21) Application number: 24917853.4
(22) Date of filing: 28.02.2024
(51) Int. Cl.: H01G 9/08, H01G 9/008

(54) **ALUMINUM ELECTROLYTIC CAPACITOR**

(30) Priority: 18.01.2024 CN 202410073413
(71) Applicant: Hunan Aihua Group Co., Ltd., Yiyang City, Hunan 413000 (CN)
(72) Inventor: LIU, Bo, Yiyang, Hunan 413000 (CN); WANG, Anan, Yiyang, Hunan 413000 (CN); AI, Liang, Yiyang, Hunan 413000 (CN); AI, Lihua, Yiyang, Hunan 413000 (CN); NIE, Jing, Yiyang, Hunan 413000 (CN)
(74) Representative: Schwarz & Partner Patentanwälte GmbH
(86) International application number: PCT/CN2024/078954
(87) International publication number: WO 2025/152235

(57) **Abstract**

This disclosure provides an aluminum electrolytic capacitor, including: a metallic case, a core package, and a cover plate covering the metallic case. The metallic case and the cover plate form an enclosed space. The core package is disposed in the enclosed space. Electrode terminals are connected to the core package. The cover plate has first through holes corresponding to the electrode terminals. The electrode terminals pass through the first through holes and extend out of the cover plate. The aluminum electrolytic capacitor further includes a sealing assembly disposed at each of the first through holes for sealing the first through hole. By adopting the aluminum electrolytic capacitor, a sealed connection is formed between the metallic case and the cover plate, so as to form the enclosed space used for accommodating the core package, and the sealing assembly is disposed at the first through hole through which each of the electrode terminals passes and extends out, so as to seal the first through hole, thereby ensuring a sealing effect of the aluminum electrolytic capacitor.

## Description

### CROSS-REFERENCE TO RELATED APPLICATION

The present application claims priority to Chinese patent application No. 202410073413.6, filed on January 18, 2024.

### TECHNICAL FIELD

The present disclosure relates to the technical field of capacitors, and more particularly, to an aluminum electrolytic capacitor.

### BACKGROUND

Traditional aluminum electrolytic capacitors mostly adopt wound core packages, which, after impregnation, are assembled and formed by using accessories such as an aluminum case and a rubber plug. With the miniaturization and flattening of electronic products, traditional cylindrical aluminum electrolytic capacitors have no advantage in space utilization and also restrict the development trend of miniaturization and flattening of electronic products. Due to the application limitations of the cylindrical aluminum electrolytic capacitors, rectangular aluminum electrolytic capacitors have been developed, which can effectively meet the structural requirements imposed by the miniaturization and flattening of the electronic products.

However, sealing between a cover plate and a case, between the cover plate and an anode lead terminal, and between the cover plate and a cathode lead terminal of a rectangular aluminum electrolytic capacitor cannot be achieved through waisted crimping sealing as in a traditional cylindrical capacitor. Especially when applied in a liquid aluminum electrolytic capacitor, the inability to achieve complete sealing will bring safety hazards due to the leakage of the electrolytic solution. Therefore, a sealing problem of the rectangular aluminum electrolytic capacitor has become a main problem to be solved for market application.

### SUMMARY

The purpose of the technical solution of the present disclosure is to provide an aluminum electrolytic capacitor for solving a sealing problem of a rectangular aluminum electrolytic capacitor.

An embodiment of the present disclosure provides an aluminum electrolytic capacitor, including a metallic case, a core package, and a cover plate covering the metallic case. The metallic case and the cover plate form an enclosed space, and the core package is disposed in the enclosed space. Electrode terminals are connected to the core package. The cover plate has first through holes corresponding to the electrode terminals. The electrode terminals pass through the first through holes and extend out of the cover plate. The aluminum electrolytic capacitor further includes a sealing assembly disposed at each of the first through holes for sealing the first through hole.

Optionally, in the aluminum electrolytic capacitor, the cover plate is made of a metallic material. The sealing assembly is located in each of the first through holes and provided between the cover plate and each of the electrode terminals. The sealing assembly is made of an electrically insulating material.

Optionally, in the aluminum electrolytic capacitor, limiting members are provided on a first surface of the cover plate. The limiting members are in one-to-one correspondence with the first through holes. The limiting members are sealingly connected to the cover plate. The limiting member includes a second through hole that is arranged coaxially with the first through hole and in communication with the first through hole. The first through hole and the second through hole form an accommodation space. The sealing assembly is disposed in the accommodation space. Each of the electrode terminals penetrates the sealing assembly and the limiting member and extends out of the limiting member. The first surface is a surface facing away from the enclosed space.

Optionally, in the aluminum electrolytic capacitor, a first limiting surface is formed in the second through hole. The sealing assembly abuts against the first limiting surface. The first limiting surface is perpendicular to an axis of each of the electrode terminals.

Optionally, in the aluminum electrolytic capacitor, each of the first through holes has a second limiting surface parallel to the first limiting surface. The sealing assembly includes a main sealing body and a pressing piece. The main sealing body is connected to the first limiting surface. The pressing piece is connected to each of the cover plate and the main sealing body at the second limiting surface, and presses the main sealing body in a direction perpendicular to the first limiting surface.

Optionally, in the aluminum electrolytic capacitor, the second through hole includes a first-diameter through hole and a second-diameter through hole that have different diameters. The first-diameter through hole is in communication with the first through hole and the second-diameter through hole. A connection wall surface between an inner wall of the first-diameter through hole and an inner wall of the second-diameter through hole forms the first limiting surface, and a connection wall surface between the inner wall of the first-diameter through hole and an inner wall of the first through hole forms the second limiting surface.

Optionally, in the aluminum electrolytic capacitor, the pressing piece is disposed in the first through hole and on a second surface of the cover plate, and abuts against the second limiting surface. The pressing piece has a third through hole at a center of the pressing piece. Each of the electrode terminals is coaxial with the corresponding third through hole and passes through the third through hole and the accommodation space. In the accommodation space, a space between the electrode terminal and the limiting member is filled with the main sealing body. The second surface is a surface facing away from the first surface.

Optionally, in the aluminum electrolytic capacitor, the main sealing body includes a first sealing body and a second sealing body. The first sealing body includes a first cylinder that is in mating connection with the second-diameter through hole and a second cylinder that is in mating connection with a part of the first-diameter through hole. The second sealing body includes a third cylinder that is in mating connection with another part of the first-diameter through hole and a fourth cylinder that is in mating connection with the third through hole. A bottom surface of the second cylinder abuts against a top surface of the third cylinder. Each of the electrode terminals penetrates the first cylinder, the second cylinder, the third cylinder, and the fourth cylinder sequentially.

Optionally, in the aluminum electrolytic capacitor, at least a part of the first cylinder extends out of the limiting member.

Optionally, in the aluminum electrolytic capacitor, the first sealing body has, at its center, a first central hole, a second central hole, and a third central hole that are sequentially arranged from a top surface of the first sealing body to a bottom surface of the first sealing body, the first central hole, the second central hole, and the third central hole have sequentially increasing hole diameters and communicate with one another. Each of the electrode terminals includes an electrode cap. The electrode cap includes a first part that is in mating connection with the second central hole and a second part that is in mating connection with the third central hole. A top surface of the electrode cap abuts against a connection wall surface between the first central hole and the second central hole. A bottom surface of the electrode cap is disposed on a top surface of the second sealing body.

Optionally, in the aluminum electrolytic capacitor, the electrode cap further includes a first connection end and a second connection end that are each integrally connected to the electrode cap. The first connection end extends upwards from the top surface of the electrode cap, and extends out of the first sealing body through the first central hole. The second connection end extends downwards from the bottom surface of the electrode cap, penetrates the second sealing body, and extends out of the second sealing body.

Optionally, in the aluminum electrolytic capacitor, a diameter of the first connection end is equal to a diameter of the second connection end, and is smaller than a diameter of the first part and a diameter of the second part.

Optionally, in the aluminum electrolytic capacitor, the main sealing body is made of an elastic plastic material, and the pressing piece is made of a metallic material.

Optionally, in the aluminum electrolytic capacitor, the pressing piece is connected to the cover plate through welding.

Optionally, in the aluminum electrolytic capacitor, a shape and a size of an outer surface of the limiting member are identical to a shape and a size of the first through hole, respectively.

Optionally, in the aluminum electrolytic capacitor, each of the electrode terminals has at least one protrusion on an outer surface of the electrode terminal, and the main sealing body has at least one recess that is in mating connection with the at least one protrusion.

Optionally, in the aluminum electrolytic capacitor, a surface of the main sealing body in contact with the limiting member includes a concave curved surface portion. The concave curved surface portion is formed by applying a pressing force to a corresponding position on an outer surface of the limiting member.

Optionally, in the aluminum electrolytic capacitor, the sealing assembly is formed by calcining and melting a glass bead in each of the first through holes.

Optionally, in the aluminum electrolytic capacitor, the sealing assembly includes a sealant, each of the first through holes being filled with the sealant.

Optionally, in the aluminum electrolytic capacitor, a filling groove surrounding the first through hole is provided in a first surface of the cover plate facing away from the enclosed space, and the filling groove is filled with a sealant. The sealant in the filling groove and the sealant in the first through hole are manufactured by a same process.

Optionally, in the aluminum electrolytic capacitor, each of the electrode terminals has a protrusion on an outer surface of the electrode terminal. The protrusion is located inside the enclosed space. The electrode terminal is sleeved with a blocking rubber ring. The blocking rubber ring is disposed between the protrusion and the cover plate.

Optionally, in the aluminum electrolytic capacitor, the sealing assembly includes a connection cap that is provided on the cover plate and protrudes in a direction away from the enclosed space. The connection cap is made of a metallic material and is sealingly connected to the cover plate. A part of the electrode terminal extending out of the cover plate is inserted into the connection cap. The electrode terminal is connected to the connection cap through welding.

Optionally, in the aluminum electrolytic capacitor, the cover plate is made of a metallic material. The cover plate and the connection cap are integrally formed.

Optionally, in the aluminum electrolytic capacitor, the electrode terminals include a cathode terminal. The cover plate is made of a metallic material. The connection cap includes a first connection cap corresponding to the cathode terminal and sealingly welded to the cover plate.

Optionally, in the aluminum electrolytic capacitor, the electrode terminals further include an anode terminal. The connection cap further includes a second connection cap corresponding to the anode terminal and sealingly connected to the cover plate through a glass bead. Or a ceramic ring is arranged between the second connection cap and the cover plate. The ceramic ring is sealingly welded to each of the cover plate and the second connection cap.

Optionally, in the aluminum electrolytic capacitor, the core package includes an anode foil, an electrolytic paper, and a cathode foil. Two anodes are electrically connected to the anode foil, and two cathodes are electrically connected to the cathode foil. The connection cap includes two first connection caps corresponding to the two cathodes respectively and two second connection caps corresponding to the two anodes respectively.

Optionally, in the aluminum electrolytic capacitor, the cover plate includes a first sub-plate made of a metallic material and a second sub-plate made of an insulating material. The electrode terminals are provided on the first sub-plate, and the core package is provided with conductive foil strips electrically connected to the electrode terminals.

Optionally, in the aluminum electrolytic capacitor, the electrode terminals include an anode terminal and a cathode terminal. The cathode terminal is connected to the first sub-plate through welding, and the anode terminal is electrically isolated from the first sub-plate by a glass bead.

Optionally, in the aluminum electrolytic capacitor, the electrode terminals include an anode terminal and a cathode terminal. The anode terminal is connected to the first sub-plate through welding. The first sub-plate is provided with a ceramic ring. The ceramic ring surrounds the anode terminal and is fixedly connected to the first sub-plate through welding. The anode terminal is fixedly connected to a part of the first sub-plate located inside the ceramic ring through welding.

Optionally, in the aluminum electrolytic capacitor, the core package includes an anode foil, an electrolytic paper, and a cathode foil. An anode conductive foil strip is electrically connected to the anode foil. A cathode conductive foil strip is electrically connected to the cathode foil. The anode conductive foil strip is electrically connected to the anode terminal of the electrode terminals. The cathode conductive foil strip is electrically connected to the cathode terminal of the electrode terminals.

Optionally, in the aluminum electrolytic capacitor, a circuit board is provided in an interior of the enclosed space, and is flatly arranged on the cover plate. Each of the electrode terminals penetrates the circuit board and extends into one of the first through holes.

Optionally, in the aluminum electrolytic capacitor, an insulating layer is disposed between the circuit board and the cover plate.

Optionally, in the aluminum electrolytic capacitor, the circuit board is provided with a safety member.

Optionally, in the aluminum electrolytic capacitor, the cover plate is made of a metallic material. The metallic case is connected to the cover plate through laser welding or parallel welding.

Optionally, in the aluminum electrolytic capacitor, the limiting member is connected to the cover plate through laser welding. Or the limiting member and the cover plate are integrally formed.

Optionally, in the aluminum electrolytic capacitor, the cover plate has a receiving groove in a first surface of the cover plate. The receiving groove is filled with a sealant. The sealing assembly is located below the sealant. Each of the electrode terminals penetrates the sealant and extends out of the sealant. The first surface is a surface facing away from the enclosed space.

Optionally, in the aluminum electrolytic capacitor, a top surface diameter of the receiving groove is smaller than a bottom surface diameter of the receiving groove.

### BRIEF DESCRIPTION OF THE DRAWINGS

In order to clearly explain technical solutions of embodiments of the present disclosure or the related art, accompanying drawings used in description of the embodiments are briefly described below. Obviously, the accompanying drawings as described below are merely some embodiments of the present disclosure. Based on these drawings, other drawings can be obtained by those skilled in the art without creative effort.
FIG. 1 is a schematic perspective structural view illustrating an aluminum electrolytic capacitor according to an embodiment of the present disclosure.
FIG. 2 is a schematic perspective structural view illustrating a sealing structure in an aluminum electrolytic capacitor according to a first embodiment of the present disclosure.
FIG. 3 is a schematic cross-sectional structural view illustrating a sealing structure in an aluminum electrolytic capacitor according to a first embodiment of the present disclosure.
FIG. 4 is a schematic perspective structural view illustrating a sealing structure in an aluminum electrolytic capacitor according to a second embodiment of the present disclosure.
FIG. 5 is a schematic cross-sectional structural view illustrating a sealing structure in an aluminum electrolytic capacitor according to a second embodiment of the present disclosure.
FIG. 6 is a schematic cross-sectional structural view illustrating a sealing structure in an aluminum electrolytic capacitor according to a third embodiment of the present disclosure.
FIG. 7 is a schematic cross-sectional structural view illustrating a sealing structure in an aluminum electrolytic capacitor according to a fourth embodiment of the present disclosure.
FIG. 8 is a schematic perspective structural view illustrating a sealing structure in an aluminum electrolytic capacitor according to a fifth embodiment of the present disclosure.
FIG. 9 is a schematic cross-sectional structural view illustrating a sealing structure in an aluminum electrolytic capacitor according to a fifth embodiment of the present disclosure.
FIG. 10 is a schematic cross-sectional structural view illustrating a sealing structure in an aluminum electrolytic capacitor according to a sixth embodiment of the present disclosure.
FIG. 11 is a schematic perspective structural view illustrating a cover plate in a sixth embodiment.
FIG. 12 is a schematic perspective structural view illustrating a sealing structure in an aluminum electrolytic capacitor according to a sixth embodiment of the present disclosure.
FIG. 13 is a schematic cross-sectional structural view illustrating a sealing structure in an aluminum electrolytic capacitor according to a seventh embodiment of the present disclosure.
FIG. 14 is a schematic perspective structural view illustrating a sealing structure in an aluminum electrolytic capacitor according to an eighth embodiment of the present disclosure.
FIG. 15 is a schematic cross-sectional structural view illustrating a sealing structure in an aluminum electrolytic capacitor according to an eighth embodiment of the present disclosure.
FIG. 16 is a schematic perspective structural view illustrating a sealing structure in an aluminum electrolytic capacitor according to a ninth embodiment of the present disclosure.
FIG. 17 is a schematic perspective structural view illustrating a sealing structure in an aluminum electrolytic capacitor according to a tenth embodiment of the present disclosure.
FIG. 18 is a schematic perspective structural view illustrating a sealing structure in an aluminum electrolytic capacitor according to an eleventh embodiment of the present disclosure.
FIG. 19 is a schematic perspective structural view illustrating a sealing structure in an aluminum electrolytic capacitor according to a twelfth embodiment of the present disclosure.
FIG. 20 is a schematic perspective structural view illustrating a sealing structure in an aluminum electrolytic capacitor according to a thirteenth embodiment of the present disclosure.
FIG. 21 is a schematic perspective structural view illustrating an arrangement of a circuit board in an aluminum electrolytic capacitor according to an embodiment of the present disclosure.
FIG. 22 is a schematic cross-sectional structural view illustrating an arrangement of a circuit board in an aluminum electrolytic capacitor according to an embodiment of the present disclosure.
FIG. 23 is a schematic exploded structural view illustrating a metallic case in an aluminum electrolytic capacitor according to an embodiment of the present disclosure.
FIG. 24 is a schematic enlarged structural view illustrating region A in FIG. 23.
FIG. 25 is a schematic exploded structural view illustrating an aluminum electrolytic capacitor according to an embodiment of the present disclosure.
FIG. 26 is a schematic perspective structural view illustrating an aluminum electrolytic capacitor according to an embodiment of the present disclosure.
FIG. 27 is a first schematic structural view illustrating a connection structure between a cover plate and a metallic case according to an embodiment of the present disclosure.
FIG. 28 is a schematic enlarged partial view illustrating a part of the structure in FIG. 27.
FIG. 29 is a schematic partial structural view illustrating a part of a metallic case according to an embodiment of the present disclosure.
FIG. 30 is a second schematic structural view illustrating a connection structure between a cover plate and a metallic case according to an embodiment of the present disclosure.
FIG. 31 is a schematic partial structural view illustrating a part of the structure in the twelfth embodiment according to the present disclosure.
FIG. 32 is a schematic structural view illustrating a cover plate according to an embodiment of the present disclosure.

### DETAILED DESCRIPTION

In order to make the technical problems to be solved, technical solutions, and advantages of the embodiments of the present disclosure more apparent, the embodiments of the present disclosure will be described in detail below with reference to the accompanying drawings.

It should be specifically noted that, in the embodiment of the present disclosure, when a certain element is mentioned as being "fixed to, rigidly connected to, connected to, or communicated with" another element, it may be directly fixed, rigidly connected, connected, or communicated to the other element, or it may be indirectly fixed, rigidly connected, connected, or communicated to the other element through other intermediate connection members.

To solve a sealing problem of a rectangular aluminum electrolytic capacitor, an embodiment of the present disclosure provides an aluminum electrolytic capacitor. A sealed connection is formed between the metallic case and the cover plate, so as to form an enclosed space used for accommodating a core package, and a sealing assembly is disposed at a first through hole through which an electrode terminal passes and extends out, so as to seal the first through hole, thereby ensuring a sealing effect of the aluminum electrolytic capacitor.

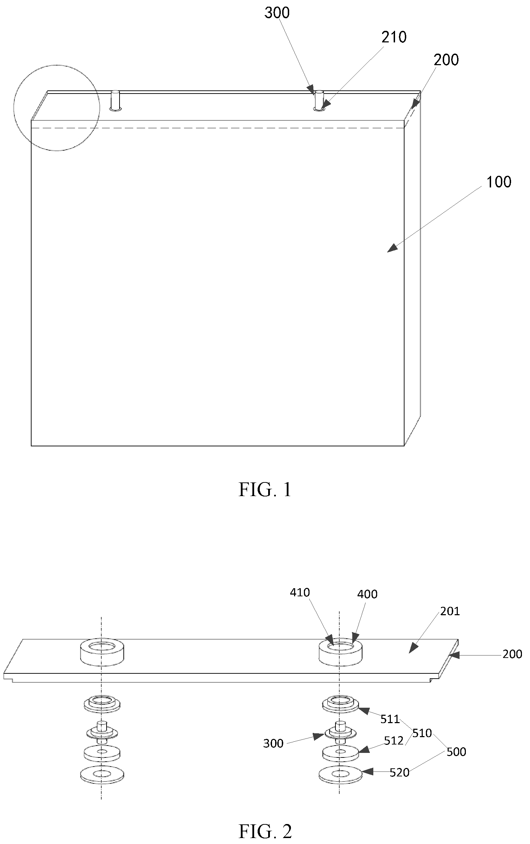

As shown in FIG. 1, FIG. 1 is a schematic perspective structural view illustrating an aluminum electrolytic capacitor according to a first embodiment of the present disclosure.

The aluminum electrolytic capacitor includes a metallic case 100, a core package, and a cover plate 200 covering the metallic case 100. The metallic case 100 and the cover plate 200 form an enclosed space, and the core package is disposed in the enclosed space. Electrode terminals 300 are connected to the core package. The cover plate 200 has first through holes 210 corresponding to the electrode terminals 300. The electrode terminals 300 pass through the first through holes 210 and extend out of the cover plate 200. The aluminum electrolytic capacitor further includes a sealing assembly disposed at each of the first through holes 210 for sealing the first through hole 210.

In an embodiment of the present disclosure, in an implementation, the metallic case 100 encloses a hexagonal space and has a quadrilateral opening on a top surface of the metallic case 100. The cover plate 200 is formed as a quadrilateral and is covered on the quadrilateral opening. Thereby a hexahedral or rectangular aluminum electrolytic capacitor is formed.

In an implementation, optionally, the cover plate 200 is made of a metallic material, such as an aluminum material.

The implementations of the embodiments of the present disclosure will be exemplified below by taking the hexahedral or rectangular aluminum electrolytic capacitor as an example. But it should be noted that the structure and the sealing manner of the sealing assembly disposed at the first through hole 210 on the cover plate 200, as well as the sealing manner between the metallic case 100 and the cover plate 200 as mentioned above, are not limited to being only applicable to the hexahedral or rectangular aluminum electrolytic capacitor. When applied to a cylindrical aluminum electrolytic capacitor, a good sealing effect can also be achieved. Therefore, the structure defined by the aluminum electrolytic capacitor in the embodiments of the present disclosure is not limited to being only applicable to the hexahedral or rectangular aluminum electrolytic capacitor.

In an embodiment, optionally, the metallic case 100 is sealingly connected to the cover plate 200 through laser welding to form the enclosed space.

The electrode terminals 300 mentioned in the embodiment of the present disclosure include an anode terminal and a cathode terminal. The anode terminal and the cathode terminal both pass through the first through hole 210 on the cover plate 200 and extend out of the exterior of the cover plate 200. And optionally, structures of sealing assemblies at the first through holes corresponding to the anode terminal and the cathode terminal are the same, which will not be described separately in the embodiment of the present disclosure. That is, the mentioned electrode terminal 300 may be an anode terminal or a cathode terminal.

Optionally, the core package inside the metallic case 100 is provided with a conductive foil strip. The conductive foil strip includes an anode conductive foil strip and a cathode conductive foil strip. The anode conductive foil strip is electrically connected to the anode terminal of the electrode terminals 300. The cathode conductive foil strip is electrically connected to the cathode terminal of the electrode terminals 300.

In an embodiment, optionally, the sealing assembly is located in each of the first through holes 210 and provided between the cover plate 200 and each of the electrode terminals 300. The sealing assembly is made of an electrically insulating material.

The specific implementation of the sealing assembly in the embodiments of the present disclosure will be exemplified below in conjunction with specific embodiments.

### First embodiment

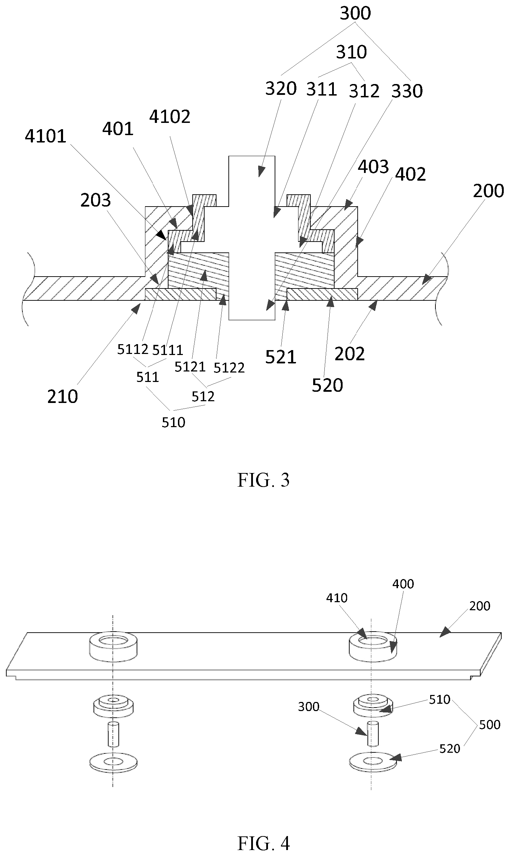

In the first embodiment, as shown in FIG. 2 and FIG. 3, optionally, the cover plate 200 is made of a metallic material, such as an aluminum material. The cover plate 200 is provided with limiting members 400 on a first surface 201 of the cover plate 200. Each first through hole 210 of the first through holes 210 corresponds to one limiting member 400 of the limiting members 400. The limiting members 400 are sealingly connected to the cover plate 200.

The limiting member 400 includes a second through hole 410 that is arranged coaxially with the first through hole 210 and in communication with the first through hole 210. The first through hole 210 and the second through hole 410 form an accommodation space. The sealing assembly 500 is disposed in the accommodation space. Each of the electrode terminals 300 penetrates the sealing assembly 500 and the limiting member 400 and extends out of the limiting member 400. The first surface 201 is a surface facing away from the enclosed space.

According to the embodiment, the cover plate 200 is provided with the limiting members 400 on the first surface 201 of the cover plate 200, the arranged second through hole 410 and the first through hole 210 form the accommodation space for engaging the sealing assembly 500.

Optionally, the second through hole 410 has a first limiting surface 401 formed in the second through hole 410. The sealing assembly 500 abuts against the first limiting surface 401. The first limiting surface 401 is perpendicular to an axis of each of the electrode terminals 300.

Specifically, the second through hole 410 has the first limiting surface formed 401 in the second through hole, the first limiting surface 401 is perpendicular to the axis of the electrode terminal 300, the sealing assembly 500 abuts against the first limiting surface 401, thereby ensuring the sealing connection between the sealing assembly 500 and the limiting member 400.

In the embodiment of the present disclosure, optionally, the cover plate 200 may be connected to the limiting member 400 through welding. For example, the limiting member 400 may be welded on the first surface of the cover plate 200 through laser welding. Optionally, the limiting member 400 and the cover plate 200 may also be integrally formed. For example, the limiting member 400 and the cover plate 200 may be integrally formed through stamping.

As shown in FIG. 2 and FIG. 3, in an embodiment, a shape and a size of an outer surface of the limiting member 400 are identical to a shape and a size of the first through hole 210 on the cover plate 200, respectively.

Optionally, the shape of the first through hole 210 on the second surface 202 of the cover plate 200 may be any one of a circle, a rectangular, and an ellipse. Correspondingly, a structural shape enclosed by the limiting member 400 on the first surface 201 may be identical to the shape of the corresponding first through hole 210. The size of the outer surface is identical to the size of the first through hole 210.

In an embodiment of the present disclosure, optionally, as shown in FIG. 2 and FIG. 3, each of the first through holes 210 has a second limiting surface 203 parallel to the first limiting surface 401.

The sealing assembly 500 includes a main sealing body 510 and a pressing piece 520. The main sealing body 510 is connected to the first limiting surface 401. The pressing piece 520 is connected to each of the cover plate 200 and the main sealing body 510 at the second limiting surface 203, and presses the main sealing body 510 in a direction perpendicular to the first limiting surface 401.

According to the embodiment, the pressing piece 520 presses the cover plate 200 in the direction perpendicular to the first limiting surface 401, so that after the main sealing body 510 is subjected to the pressing force, it abuts against the first limiting surface 401 and is fixed in the accommodation space enclosed by the first through hole 210 and the second through hole 410, thereby ensuring the sealing performance of the main sealing body 510.

In the embodiments of the present disclosure, optionally, the main sealing body 510 is made of an elastic plastic (such as rubber) material, and the pressing piece 520 is made of a metallic material.

Optionally, the pressing piece 520 is connected to the cover plate 200 through welding. After the pressing piece 520 is provided on the cover plate 200, through a tight connection between the pressing piece 520 and the cover plate 200, the pressing force of the pressing piece 520 on the main sealing body 510 can be ensured.

In the embodiments of the present disclosure, in an implementation, optionally, as shown in FIG. 2 and FIG. 3, the limiting member 400 includes a side plate 402 and a top plate 403. The side plate 402 is disposed around the first through hole 210 to form a surrounding space above the first through hole 210. And the side plate 402 is fixedly connected to the first surface 201 of the cover plate 200. The top plate 403 and the cover plate 200 are arranged opposite to each other, and the top plate 403 is fixedly connected to the side plate 402.

In addition, the top plate 403 has a through hole. Based on the structural arrangement, the second through hole 410 formed on the limiting member 400 includes a first-diameter through hole 4101 and a second-diameter through hole 4102 that have different diameters. The first-diameter through hole 4101 is in communication with the first through hole 210 and the second-diameter through hole 4102.

A connection wall surface between an inner wall of the first-diameter through hole 4101 and an inner wall of the second-diameter through hole 4102 forms the first limiting surface 401. A connection wall surface between the inner wall of the first-diameter through hole 4101 and an inner wall of the first through hole 210 forms the second limiting surface 203.

Specifically, as shown in FIG. 3, the through hole formed on the top plate 403 is formed as the second-diameter through hole 4102, and the space formed by the surrounding arrangement of the side plate 402 is formed as the first-diameter through hole 4101.

In addition, as shown in FIG. 2 and FIG. 3, a pressing piece 520 is disposed in each of the first through holes 210 and on a second surface 202 of the cover plate 200, and abuts against the second limiting surface 203. The pressing piece 520 has a third through hole 521 at a center of the pressing piece 520. Each of the electrode terminals 300 and a respective third through hole 521 coaxially pass through the third through hole 521 and the accommodation space. In the accommodation space, a space between the electrode terminal 300 and each of the limiting members 400 is filled with the main sealing body 510.

In the embodiments of the present disclosure, the second surface 202 is a surface facing away from the first surface 201.

In the first embodiment, as shown in FIG. 2 and FIG. 3, the electrode terminal 300 includes an electrode cap 310 having a stepped shape, and a first connection end 320 and a second connection end 330 that are each integrally connected to the electrode cap 310.

The first connection end 320 extends upwards from a top surface of the electrode cap 310. The second connection end 330 extends downwards from a bottom surface of the electrode cap 310. The first connection end 320, the electrode cap 310, and the second connection end 330 are coaxially arranged.

Specifically, the electrode cap 310 includes a first part 311 and a second part 312. A diameter of the first part 311 is smaller than a diameter of the second part 312, forming the stepped shape. The first connection end 320 is connected to a top surface of the first part 311. The second connection end 330 is connected to a bottom surface of the second part 312.

In the first embodiment, optionally, the first connection end 320, the electrode cap 310, and the second connection end 330 are each formed in a cylindrical structure.

Optionally, a diameter of the first connection end 320 is equal to a diameter of the second connection end 330, and is smaller than a diameter of the first part 311 and a diameter of the second part 312.

In the first embodiment, optionally, the main sealing body 510 includes a first sealing body 511 and a second sealing body 512. The first sealing body 511 includes a first cylinder 5111 that is in mating connection with the second-diameter through hole 4102 and a second cylinder 5112 that is in mating connection with a part of the first-diameter through hole 4101. The second sealing body 512 includes a third cylinder 5121 that is in mating connection with another part of the first-diameter through hole 4101 and a fourth cylinder 5122 that is in mating connection with the third through hole 521. A bottom surface of the second cylinder 5112 abuts against a top surface of the third cylinder 5121. Each of the electrode terminals 300 penetrates the first cylinder 5111, the second cylinder 5112, the third cylinder 5121, and the fourth cylinder 5122 sequentially.

Specifically, as shown in FIG. 2 and FIG. 3, the first sealing body 511 has, at its center, a first central hole, a second central hole, and a third central hole that are sequentially arranged from a top surface of the first sealing body 511 to a bottom surface of the first sealing body 511, the first central hole, the second central hole, and the third central hole have sequentially increasing hole diameters and communicate with one another. A first part 311 of the electrode cap 310 is in mating connection with the second central hole, a second part 312 of the electrode cap 310 is in mating connection with the third central hole. A top surface of the electrode cap 310 abuts against a connection wall surface between the first central hole and the second central hole. A bottom surface of the electrode cap 310 is disposed on a top surface of the second sealing body 512.

Optionally, the top surface of the electrode cap 310 and a top surface of the limiting member 400 are located on a same plane.

According to the embodiment, the first connection end 320 extends out of the first sealing body 511 through the first central hole. The second connection end 330 extends downwards from the bottom surface of the electrode cap 310, penetrates the second sealing body 512, and extends out of the second sealing body 512.

In the embodiment, optionally, at least a part of the first cylinder 5111 extends out of each of the limiting member 400.

Optionally, each of the first sealing body 511 and the second sealing body 512 is made of a plastic insulating material (such as rubber). The first sealing body 511 is formed as an insulating gasket. The second sealing body 512 is formed as a pressing gasket. Moreover, according to the first embodiment, the electrode terminal 300 is provided with the electrode cap 310 at a middle part of the electrode terminal 300, the electrode cap 310 is in mating connection with the main sealing body 510. The electrode cap 310 is disposed on the pressing gasket and in mating connection with the insulating gasket, such that the electrode cap 310 is electrically isolated from the cover plate 200.

In addition, since the pressing piece 520 is disposed at a bottom of the second sealing body 512 (the pressing gasket), and the pressing piece 520 is connected to the cover plate 200 through welding (preferably laser welding). After the pressing piece 520 is welded to the cover plate 200, the pressing piece 520 applies pressure to the pressing gasket (the magnitude of the pressure is generally 1 MPa to 5 MPa). After the pressing gasket receives the pressure from the pressing piece, the pressing gasket also applies pressure to the first sealing body 511 (the insulating gasket), such that the insulating gasket abuts against the limiting member 400. In this way, through the pressing of the pressing piece 520 on the insulating gasket and the pressing gasket, the insulating gasket and the pressing gasket are pressed and sealed with the electrode terminal 300. That is, the pressing piece 520 causes the pressing gasket and the insulating gasket to be pressed and fixed in the accommodation space enclosed by the first through hole and the limiting member 400.

In addition, in the embodiments of the present disclosure, optionally, the pressing piece 520 has the third through hole 521, and the second sealing body 512 is provided with the protruding fourth cylinder 5122 that is inserted into the third through hole 521. Effective isolation between the pressing piece 520 and the electrode terminal 300 can be ensured.

### Second embodiment

In the second embodiment, the structural arrangement of the limiting member 400 on the cover plate 200 is the same as that in the first embodiment, which will not be elaborated herein.

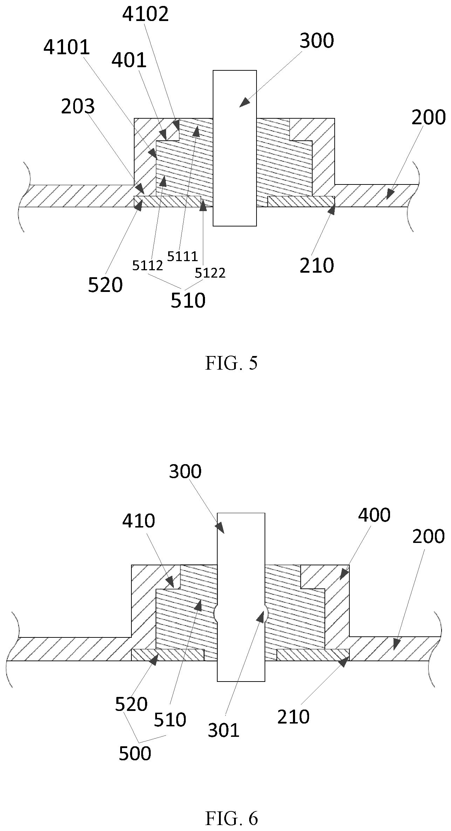

In the embodiment, as shown in FIG. 4 and FIG. 5, the sealing assembly 500 is disposed in the accommodation space formed by the second through hole 410 of the limiting member 400 and the first through hole 210. The sealing assembly 500 includes the main sealing body 510 and the pressing piece 520.

The main sealing body 510 is of an integrated structure. The main sealing body 510 is connected to the first limiting surface 401 of the limiting member 400. The pressing piece 520 is connected to each of the cover plate 200 and the main sealing body 510 at the second limiting surface 203 of the first through hole 210, and presses the main sealing body 510 in the direction perpendicular to the first limiting surface 401.

Optionally, the same as the first embodiment, the main sealing body 510 is made of an elastic plastic material, and the pressing piece 520 is made of a metallic material.

According to the second embodiment, the pressing piece 520 is connected to the cover plate 200 through welding. After the pressing piece 520 is provided on the cover plate 200, through a tight connection between the pressing piece 520 and the cover plate 200, the pressing force of the pressing piece 520 on the main sealing body 510 can be ensured.

In the second embodiment, as shown in FIG. 4 and FIG. 5, the second through hole 410 formed on the limiting member 400 includes the first-diameter through hole 4101 and the second-diameter through hole 4102 that have different diameters. The first-diameter through hole 4101 is in communication with each of the first through hole 210 and the second-diameter through hole 4102. The main sealing body 510 includes the first cylinder 5111 that is in mating connection with the second-diameter through hole 4102, the second cylinder 5112 that is in mating connection with the first-diameter through hole 4101, and the fourth cylinder 5122 that is in mating connection with the third through hole 521 of the pressing piece 520.

The first cylinder 5111, the second cylinder 5112, and the fourth cylinder 5122 are combined to form the main sealing body 510 that has an integrated connection structure. In addition, a top surface of the first cylinder 5111 and the top surface of the limiting member 400 are located on a same plane.

In the second embodiment, optionally, the electrode terminal 300 is formed in a cylindrical structure. The main sealing body 510 has, at its center, a center hole matching the electrode terminal 300. The electrode terminal 300 is inserted into the center hole from a bottom surface of the main sealing body 510 and extends out of a top surface of the main sealing body 510.

In the embodiment, the main sealing body 510 is disposed in the accommodation space formed by the second through hole 410 of the limiting member 400 and the first through hole 210 of the cover plate 200. The pressing piece 520 is disposed in the first through hole 210 at the bottom surface of the cover plate 200, and is located at the bottom of the main sealing body 510. Therefore, in the accommodation space, the space between the limiting member 400 and the electrode terminal 300 is filled with the sealing assembly including the main sealing body 510 and the pressing piece 520. Moreover, the pressing piece 520 is connected to the cover plate 200 through welding (preferably laser welding), and the pressing piece 520 applies pressure to the main sealing body 510 (the magnitude of the pressure is generally 1 MPa to 5 MPa), causing the main sealing body 510 to abut against the first limiting surface 401 of the limiting member 400, and achieving compression sealing through the main sealing body 510.

### Third embodiment

In the embodiment, as shown in FIG. 6, the structural arrangement of the limiting member 400 on the cover plate 200 is the same as that in the second embodiment, which will not be elaborated herein.

In the third embodiment, the same as the second embodiment, the sealing assembly 500 includes the main sealing body 510 and the pressing piece 520. The structural arrangement of the main sealing body 510 and the pressing piece 520 in the accommodation space formed by the second through hole 410 of the limiting member 400 and the first through hole 210 of the cover plate 200 is the same as that in the second embodiment, which will not be elaborated herein.

Different from the second embodiment, in the third embodiment, the electrode terminal 300 has at least one protrusion 301 on an outer surface of the electrode terminal 300. The main sealing body 510 has at least one recess that is in mating connection with the at least one protrusion 301. The protrusion 301 is engaged in the recess of the main sealing body 510. In this way, through the engagement of the protrusion 301 and the recess, the contact area between the electrode terminal 300 and the main sealing body 510 is increased to enhance the effect of compression sealing. In addition, it can also achieve the effect during installation between the electrode terminal 300 and the main sealing body 510.

### Fourth embodiment

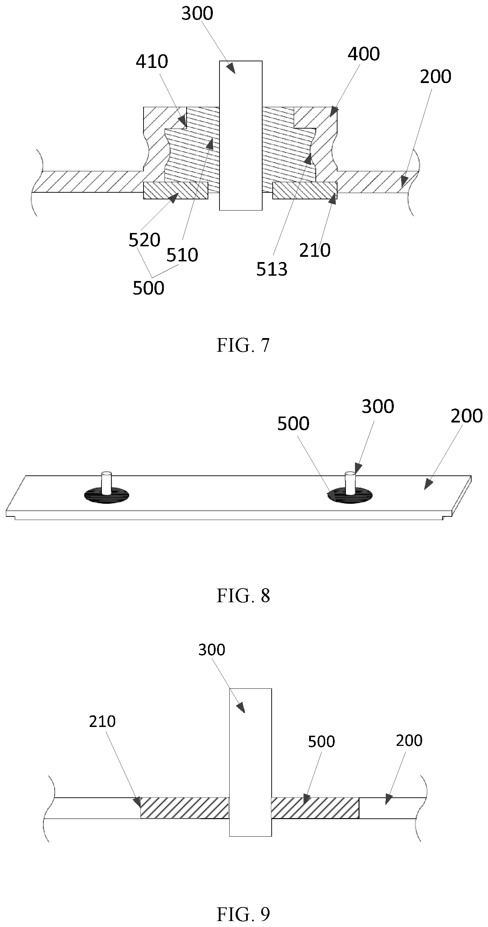

In the embodiment, as shown in FIG. 7, the structural arrangement of the limiting member 400 on the cover plate 200 is the same as that in the second embodiment, which will not be elaborated herein.

Comparing FIG. 5 with FIG. 7, in the fourth embodiment, compared with the second embodiment, a surface of the main sealing body 510 in contact with the limiting member 400 includes a concave curved surface portion 513. The concave curved surface portion 513 is formed by applying a pressing force to a corresponding position on an outer surface of the limiting member 400.

According to the embodiment, as shown in FIG. 7, the opposite position on the outer surface of the limiting member 400 is formed as a curved surface portion concave towards the center line of the electrode terminal 300. Correspondingly, under the condition that pressure is applied to the limiting member 400, the connection surface between the main sealing body 510 and the limiting member 400 is driven to deform, forming the concave curved surface portion 513.

According to the embodiment, through bending deformation of the connection surface between the main sealing body 510 and the limiting member 400, the contact area of the connection between the main sealing body 510 and the limiting member 400 can be increased, and the effect of compression sealing can be achieved.

### Fifth embodiment

In the fifth embodiment, as shown in FIG. 8 and FIG. 9, the first through hole 210 formed on the cover plate 200 is filled with the sealing assembly 500. That is, in the first through hole 210, the sealing assembly 500 is provided between the electrode terminal 300 and the cover plate 200.

In the embodiment, the sealing assembly 500 is formed by calcining and melting a glass bead in the first through hole 210. In this way, a gas-tight structure is formed in the first through hole 210, achieving the sealing of the first through hole 210.

### Sixth embodiment

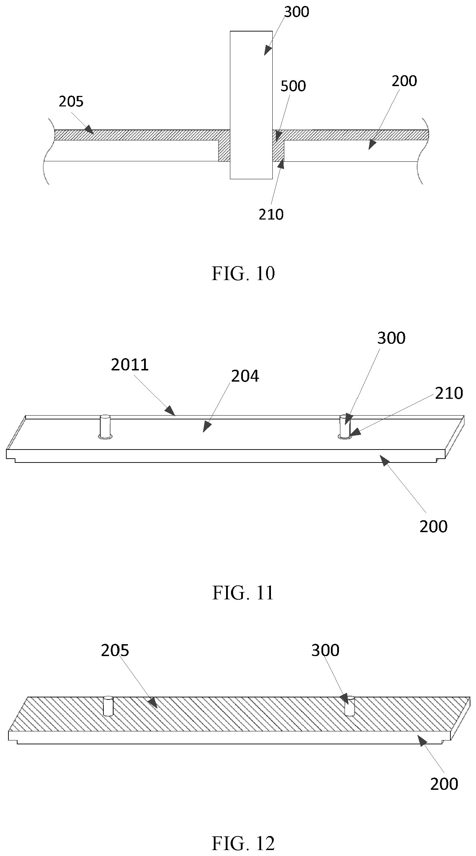

In the sixth embodiment, as shown in FIG. 10 to FIG. 12, the first through hole 210 of the cover plate 200 is filled with the sealing assembly 500.

In the embodiment, the sealing assembly 500 includes a sealant, and the first through hole 210 is filled with the sealant. The first through hole 210 is sealed by the sealant, so as to achieve electrical isolation between the electrode terminal 300 and the cover plate 200.

In the embodiment of the present disclosure, the sealant may be a resin adhesive, such as an ultraviolet curable adhesive.

In the embodiment, as shown in FIG. 11 and FIG. 12, a filling groove 204 surrounding the first through hole 210 is provided in a first surface 201 of the cover plate 200 facing away from the enclosed space, and the filling groove 204 is filled with a sealant 205. The sealant in the filling groove 204 and the sealant in the first through hole 210 are manufactured by a same process.

In this way, according to the embodiment, the sealant for sealing the first through hole 210 is extended to the region around the first through hole 210, so that the sealing area of the sealing assembly 500 is enlarged, thereby achieving the best sealing effect.

Optionally, in the embodiment, as shown in FIG. 11 and FIG. 12, the first surface 201 of the cover plate 200 is provided with a rim 2011 protruding along an edge of the first surface 201, and a concave region surrounded by the rim 2011 is formed as the filling groove 204 to be filled with the sealant.

Optionally, a thickness of the rim 2011 may be relatively small, as long as it can achieve the effect of surrounding the sealant. According to the embodiment, the first surface of the cover plate 200 can be entirely filled with the sealant, and at the same time, the first through hole 210 is filled with the filled sealant, thereby achieving the maximum sealing area.

Optionally, the sealant may be an acrylate-based ultraviolet curable adhesive.

### Seventh embodiment

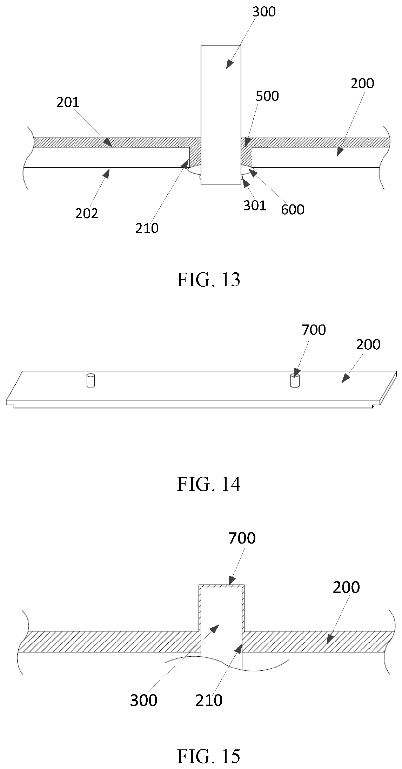

In the seventh embodiment, as shown in FIG. 13, the same as the sixth embodiment, the sealing assembly 500 in the first through hole 210 of the cover plate 200 includes the sealant, the first through hole 210 is filled with the sealant. Optionally, the sealant provided in the first through hole 210 may be extended to the filling groove around the first through hole 210.

In the embodiment, based on the sixth embodiment, the electrode terminal 300 further has a protrusion 301 on the outer surface of the electrode terminal 300, and the protrusion 301 is located inside the enclosed space. The electrode terminal 300 is sleeved with a blocking rubber ring 600. The blocking rubber ring 600 is disposed between the protrusion 301 and the cover plate 200.

According to the embodiment, the electrode terminal 300 has the protrusion 301, the blocking rubber ring 600 is provided above the protrusion 301, the blocking rubber ring 600 is pressed between the protrusion 301 and the cover plate 200, and then the first surface 201 is filled with the sealant and the sealant is cured. In this way, under the blocking effect of the blocking rubber ring 600, the uncured sealant is prevented from immersing into the second surface 202 of the cover plate 200.

### Eighth embodiment

In the eighth embodiment, as shown in FIG. 14 and FIG. 15, the sealing assembly includes a connection cap 700 that is provided on the cover plate 200 and protrudes in a direction away from the enclosed space. The connection cap 700 is made of a metallic material and is sealingly connected to the cover plate 200. A portion of the electrode terminal 300 extending out of the cover plate 200 is inserted into the connection cap 700. The electrode terminal 300 is connected to the connection cap 700 through welding.

In the embodiment of the present disclosure, the cover plate 200 is made of a metallic material, such as an aluminum material. Optionally, the cover plate 200 and the connection cap 700 are integrally formed.

According to the embodiment, through the sealing connection between the connection cap 700 and the cover plate 200, the connection cap 700 is covered on the electrode terminal 300, thereby achieving the sealing of the first through hole 210 of the cover plate 200 through which the electrode terminal 300 passes. The electrode terminal 300 is inserted into the connection cap 700 by passing through the first through hole 210. The connection cap 700 is connected to the electrode terminal 300 through welding, the connection cap 700 can be electrically connected to the electrode terminal 300. In this way, a conductive foil strip on the core package in the metallic case can be electrically connected to an external circuit through the electrode terminal 300 and the connection cap 700.

Optionally, the connection cap 700 may be connected to the electrode terminal 300 through laser welding or parallel welding.

It should be noted that, the aluminum electrolytic capacitor according to the embodiments of the present disclosure is not limited to being applicable only to the hexahedral or rectangular aluminum electrolytic capacitor. In the following embodiments, specific implementations of the aluminum electrolytic capacitor according to the embodiments of the present disclosure applied to a cylindrical aluminum electrolytic capacitor are exemplified.

### Ninth embodiment

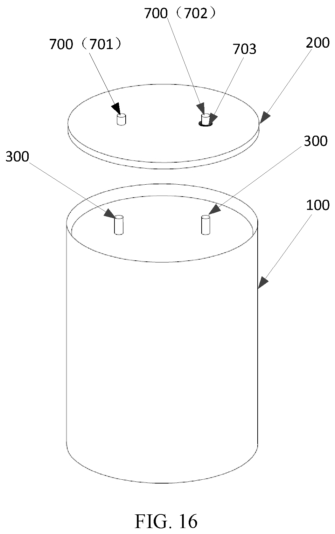

In the ninth embodiment, as shown in FIG. 16, the metallic case 100 is formed in a cylindrical structure, the cover plate 200 is formed in a circular shape. Optionally, each of the metallic case 100 and the cover plate 200 is made of an aluminum material.

In the embodiment, the same as the eighth embodiment, the sealing assembly includes the connection cap 700 that is provided on the cover plate 200 and protrudes in a direction away from the enclosed space of the metallic case 100. The connection cap 700 is made of a metallic material and is sealingly connected to the cover plate 200.

The connection cap 700 includes a first connection cap 701 corresponding to the cathode terminal and a second connection cap 702 corresponding to the anode terminal. In an embodiment, optionally, the first connection cap 701 is sealingly connected to the cover plate 200 through welding, such as through brazing. In another embodiment, optionally, the second connection cap 702 is sealingly connected to the cover plate 200 through a glass bead 703. The glass bead is calcined and melted to achieve the connection between the anode terminal and the cover plate 200. Since the electrode terminal (including the anode terminal and the cathode terminal) and the cover plate need to be sealingly provided, and the anode terminal also needs to be insulated and isolated from the cover plate, after the glass bead is used, a complete sealing between the electrode terminal and the cover plate can be achieved, and the glass bead itself is insulating, which simultaneously plays a role of insulation and isolation. According to this manufacturing method, the sealing process between the electrode terminal and the cover plate becomes simpler. In the embodiment, optionally, as shown in FIG. 16, an electrode terminal 300 is connected to the core package disposed on the metallic case 100. Optionally, the connection cap 700 and the electrode terminal 300 are each formed in a cylindrical shape. The electrode terminal includes the anode terminal and the cathode terminal. The cathode terminal is correspondingly inserted into the first connection cap 701, and the anode terminal is correspondingly inserted into the second connection cap 702.

In the ninth embodiment, the arrangement manner and the structure of the connection cap 700 on the cover plate 200 are the same as those in the eighth embodiment, which will not be elaborated herein.

### Tenth embodiment

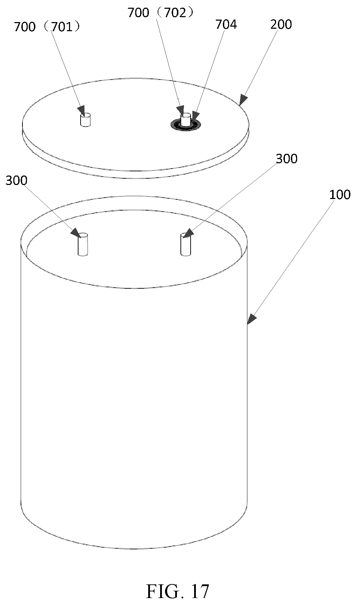

In the tenth embodiment, as shown in FIG. 17, similar to the ninth embodiment, the metallic case 100 is formed in a cylindrical structure, and the cover plate 200 is formed in a circular shape. Optionally, each of the metallic case 100 and the cover plate 200 is made of an aluminum material. The sealing assembly includes the connection cap 700 that is provided on the cover plate 200 and protrudes in a direction away from the enclosed space of the metallic case 100. The connection cap 700 is made of a metallic material and is sealingly connected to the cover plate 200.

In addition, the connection cap 700 includes the first connection cap 701 corresponding to the cathode terminal and the second connection cap 702 corresponding to the anode terminal. Optionally, the first connection cap 701 is sealingly connected to the cover plate 200 through welding, such as through brazing. In the embodiment, optionally, a ceramic ring 704 is disposed between the second connection cap 702 and the cover plate 200. The ceramic ring 704 is sealingly connected to each of the cover plate 200 and the second connection cap 702 through brazing. By using the ceramic ring 704, and by sealingly connecting the ceramic ring 704 to each of the cover plate 200 and the second connection cap 702 through brazing, the sealing effect between the second connection cap 702 and the cover plate 200 can be ensured.

In addition, the arrangement manner and the structure of the connection cap 700 on the cover plate 200 are the same as those in the eighth embodiment, which will not be elaborated herein.

### Eleventh embodiment

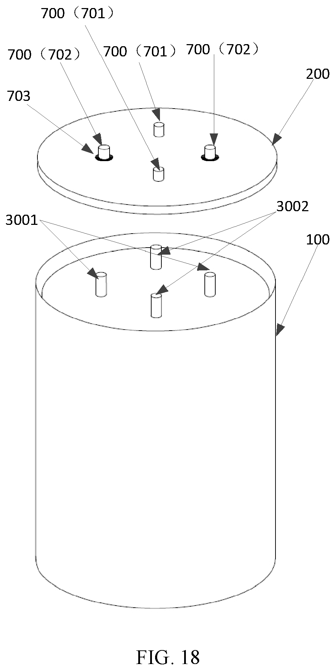

In the eleventh embodiment, as shown in FIG. 18, similar to the ninth embodiment and the tenth embodiment, the metallic case 100 is formed in a cylindrical structure, and the cover plate 200 is formed in a circular shape. Optionally, each of the metallic case 100 and the cover plate 200 is made of an aluminum material. The sealing assembly includes the connection cap 700 that is provided on the cover plate 200 and protrudes in a direction away from the enclosed space of the metallic case 100. The connection cap 700 is made of a metallic material and is sealingly connected to the cover plate 200.

In the embodiment, the core package includes an anode foil, an electrolytic paper, and a cathode foil. Two anodes 3001 are electrically connected to the anode foil, and two cathodes 3002 are electrically connected to the cathode foil. The connection cap 700 includes two first connection caps 701 corresponding to the two cathodes respectively 3002 and two second connection caps 702 corresponding to the two anodes respectively 3001.

In an embodiment, optionally, the cathode foil is connected to the cathode 3002 through riveting or welding, and the anode foil is connected to the anode 3001 through riveting or welding. In addition, each of the anode 3001 and the cathode 3002 includes a connection tab electrically connected to the anode foil or the cathode foil, and a connection post connected to the connection tab. The connection post extends out of the enclosed space of the metallic case 100 and is inserted into the corresponding first connection cap 701 or the corresponding second connection cap 702.

In an embodiment, optionally, as shown in FIG. 18, each of the two second connection caps 702 is sealingly connected to the cover plate 200 through the glass bead 703, and the sealing manner is the same as that in the ninth embodiment, which will not be elaborated herein.

In another implementation, optionally, as shown in FIG. 17, the ceramic ring 704 may also be disposed between each of the two second connection caps 702 and the cover plate 200, and the ceramic ring 704 is sealingly connected to each of the cover plate 200 and the second connection caps 702 through brazing. The sealing manner is the same as that in tenth embodiment, which will not be elaborated herein.

### Twelfth embodiment

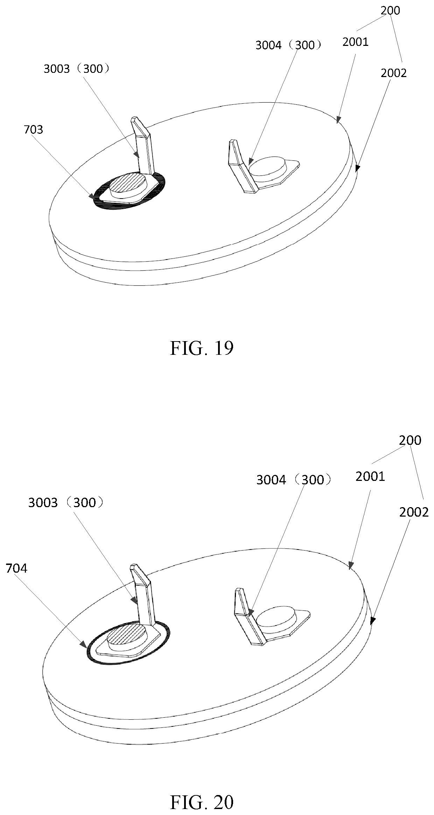

In the twelfth embodiment, the metallic case is formed in a cylindrical structure, the cover plate is formed in a circular shape. As shown in FIG. 19, the cover plate 200 includes a first sub-plate 2001 made of a metallic material and a second sub-plate 2002 made of an insulating material. The second sub-plate 2002 is disposed on a side closer to the metallic case (not shown in the figure) than the first sub-plate 2001. That is, the second sub-plate 2002 is located between the first sub-plate 2001 and the metallic case. In an embodiment, the first sub-plate 2001 is made of an aluminum material.

The second sub-plate 2002 has the first through hole (not shown in the figure). The first sub-plate 2001 is provided with an electrode terminal 300. The metallic case is provided with a conductive foil strip inside. The conductive foil strip is electrically connected to the electrode terminal 300.

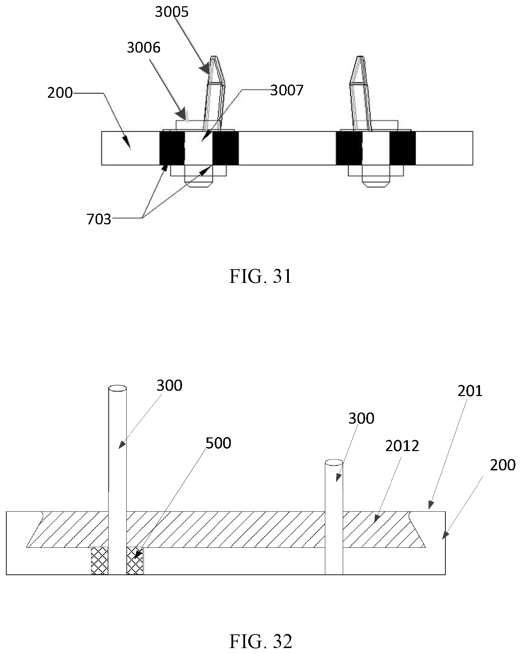

Optionally, the electrode terminal 300 is formed in a structure of an electrode terminal of a horn-type capacitor. As shown in FIG. 31, the electrode terminal 300 includes a horn part 3005 and a connection part 3006. Optionally, the horn part 3005 and the connection part 3006 may be an integral structure. The connection part 3006 is provided with a pin 3007 penetrating the connection part 3006 and the cover plate 200.

The electrode terminal 300 includes an anode terminal 3003 and a cathode terminal 3004. The cathode terminal 3004 is connected to the first sub-plate 2001 through welding, such as through brazing. The anode terminal 3003 and the first sub-plate 2001 are electrically isolated through a glass bead 703. As shown in FIG. 31, inside the cover plate 200, the glass bead 703 isolates the pin 3007 from the cover plate 200 (including the first sub-plate), to achieve isolation and sealing between the cover plate 200 and the anode terminal 3003.

In the embodiment, each of the anode terminal and the cathode terminal is pre-sealed and connected to the first sub-plate. The second sub-plate is arranged at a lower part of the first sub-plate. After sealing, the anode terminal and the cathode terminal extend out of the second sub-plate and are connected to the anode conductive foil strip and the cathode conductive foil strip, respectively.

In the embodiment, optionally, the core package includes the anode foil, the electrolytic paper, and the cathode foil. The anode foil is electrically connected (such as through riveting or welding) to the anode conductive foil strip. The cathode foil is electrically connected (such as through riveting or welding) to the cathode conductive foil strip. The anode conductive foil strip is electrically connected to the anode terminal 3003. The cathode conductive foil strip is electrically connected to the cathode terminal 3004.

According to the embodiment, by sealingly connecting each of the anode terminal and the cathode terminal to the first sub-plate which is made of an aluminum material, and integrally covering the second sub-plate, sealing of the first through hole of the second sub-plate can be achieved.

### Thirteenth embodiment

In the thirteenth embodiment, the same as the twelfth embodiment, the metallic case is formed in a cylindrical structure, the cover plate is formed in a circular shape. As shown in FIG. 20, the cover plate 200 includes the first sub-plate 2001 made of a metallic material and the second sub-plate 2002 made of an insulating material. The second sub-plate 2002 is disposed on a side closer to the metallic case (not shown in the figure) than the first sub-plate 2001. In an embodiment, the first sub-plate 2001 is made of an aluminum material.

In the embodiment, the electrode terminal 300 includes an anode terminal 3003 and a cathode terminal 3004. The cathode terminal 3004 is connected to the first sub-plate 2001 through welding, such as through brazing. The anode terminal 3003 is connected to the first sub-plate 2001 through welding (such as through brazing). The first sub-plate 2001 is provided with the ceramic ring 704 in the first sub-plate 2001, the ceramic ring 704 surrounds the anode terminal 3003 and is fixedly connected to the first sub-plate 2001 through welding (such as through brazing). The anode terminal 3003 is fixedly connected to a part of the first sub-plate 2001 located inside the ceramic ring 704 through welding (such as through brazing).

According to the embodiment, by disposing the ceramic ring 704 surrounding the anode terminal 3003, isolation between the anode terminal 3003 and the first sub-plate 200 can be achieved. And brazing is used on each of an inner side and an outer side of the ceramic ring 704 to achieve a sealing connection between the ceramic ring 704 and the first sub-plate 200. The first sub-plate 200 located on the inner side of the ceramic ring 704 and the anode terminal 300 are sealingly connected to each other through brazing.

The ninth embodiment to the thirteenth embodiment as described above take the cylindrical capacitor as an example to illustrate the sealing assembly between the electrode terminal and the cover plate, but it should be noted that the sealing assembly in the embodiments is not limited to being applicable only to the cylindrical capacitors, and can also be applied to the hexahedral or rectangular aluminum electrolytic capacitors, and each of the embodiments is not separately exemplified herein.

As shown in FIG. 32, FIG. 32 a schematic structural view illustrating a cover plate 200 according to an embodiment of the present disclosure. In the embodiment, the cover plate 200 has a receiving groove on a first surface 201 (the first surface is a surface facing away from the enclosed space of the capacitor) of the cover plate 200. The receiving groove is filled with a sealant 2012. The sealing assembly is located below the sealant 2012. By disposing the sealant 2012 above the sealing assembly 500 to cover the sealing assembly 500, the sealing assembly 500 is further sealed. In addition, the electrode terminal 300 penetrates the sealant 2012 and extends out of the cover plate 200.

Optionally, a top surface diameter of the receiving groove is smaller than a bottom surface diameter. A top surface of the receiving groove is located on the first surface 201, and a bottom surface of the receiving groove is located inside the cover plate 200. According to the arrangement, an inner wall surface of the receiving groove is formed as an inclined surface, to ensure a stable fixation of the sealant 2012 in the receiving groove. In addition, according to the embodiment, by filling the sealant 2012 above the sealing assembly 500, under a condition that the cover plate 200 is deformed due to heating or pressing, the sealant 2012 can press against the sealing assembly 500 in a direction of the sealing assembly 500, to ensure the sealing effect of the sealing assembly 500.

It should be noted that, in the implementation structure of the cover plate 200 provided by the embodiment, the structural arrangement of the sealing assembly 500 can be applicable to the sealing assembly according to any one of the first embodiment to the thirteenth embodiment as described above, and the specific implementation of the sealing assembly 500 in the embodiment will not be elaborated herein.

In the aluminum electrolytic capacitor according to the embodiments of the present disclosure, in the first embodiment to the thirteenth embodiment as described above, the enclosed space formed by the metallic case and the cover plate is provided with a circuit board in an interior of the enclosed space. The electrode terminal penetrates the circuit board and extends into the first through hole. Optionally, an insulating layer is disposed between the circuit board and the cover plate. Optionally, the circuit board is flatly arranged on the cover plate, or is disposed at a distance from the cover plate. That is, the circuit board is disposed on an inner side of the cover plate, provided that the electrical connection of the circuit board is not affected. Optionally, the circuit board is provided with a safety member. The safety member is used for safety protection of the core package in the enclosed space.

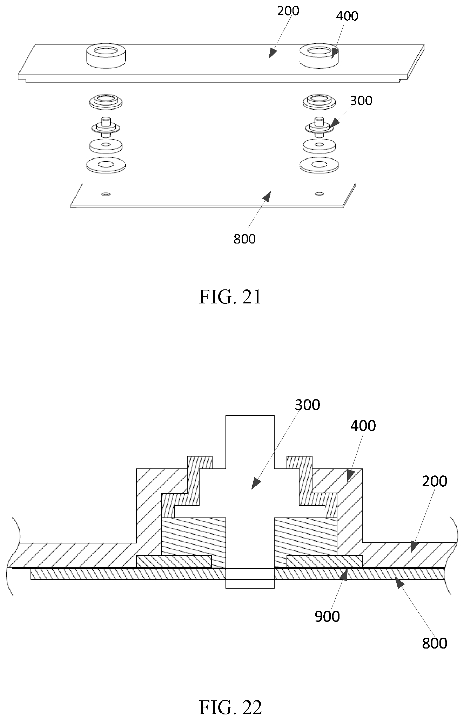

Taking the first embodiment as an example, as shown in FIG. 21 and FIG. 22, the cover plate 200 is provided with a circuit board 800 on an inner side of the cover plate 200. The electrode terminal 300 penetrates the circuit board 800 to extend into the first through hole, penetrates the limiting member 400, and extends out of the limiting member 400.

An insulating layer 900 is disposed between the circuit board 800 and the cover plate 200. The insulating layer 900 is configured to achieve electrical isolation between the circuit board 800 and the cover plate 200. Optionally, the insulating layer 900 may be an insulating plastic sheet or an insulating resin layer.

In the embodiments of the present disclosure, the circuit board 800 is provided with a safety member. Optionally, the safety member includes a safety switch and/or a fuse, etc.

In an embodiment, optionally, the safety member includes the safety switch. When a high voltage surge occurs between the anode terminal and the cathode terminal, the safety switch on the circuit board 800 may be switched on, causing a short circuit between the anode terminal and the cathode terminal, thereby ensuring that the core package in the metallic case is not impacted by a high current.

In another embodiment, optionally, the safety member includes the fuse. When a high voltage surge occurs between the anode terminal and the cathode terminal, the fuse is blown, and then an disconnection is formed between the anode terminal and the core package, thereby ensuring that the core package in the metallic case is not impacted by a high current.

It should be noted that the safety member may be a safety protection structure of other forms, as long as it can ensure that the core package in the metallic case is not impacted by the high current under the high voltage surge.

In addition, the structure of disposing the circuit board on the inner side of the cover plate, in addition to being applicable to the first embodiment, it may also be applied to the second embodiment to the thirteenth embodiment, and the specific installation manner of the circuit board may refer to the above description when applied to the first embodiment, and no further specific examples will be given for each embodiment herein.

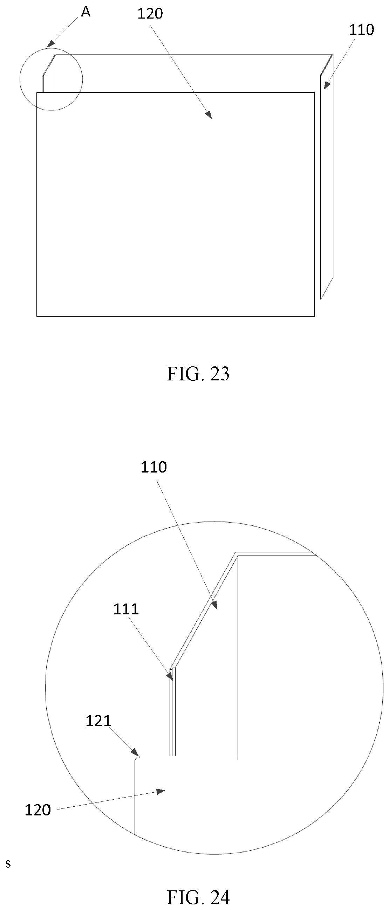

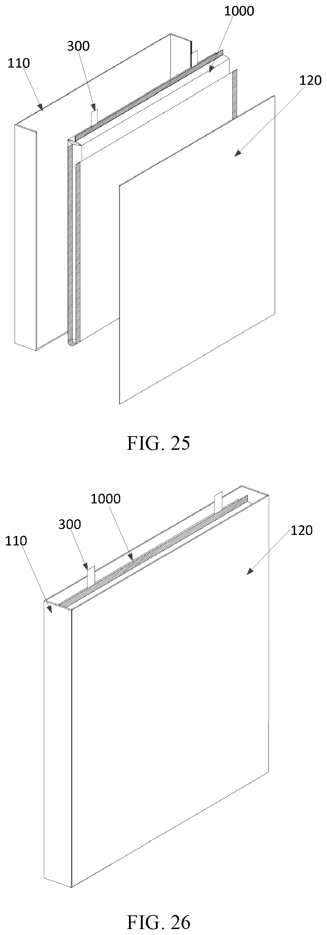

In the aluminum electrolytic capacitor described in the embodiments of the present disclosure, as shown in FIG. 23 to FIG. 26, the metallic case 100 includes a main body 110 and a connection plate 120. The main body 110 is bent to form an accommodation space. Optionally, the accommodation space is enclosed by three side surfaces, and one side surface has an opening. The connection plate 120 is formed as a plate structure, covers the main body 110, and closes the opening.

Optionally, the connection plate 120 is connected to the main body 110 through laser welding. As shown in FIG. 24, optionally, the connection plate 120 is provided with a first step 121 on a side edge of the connection plate 120. The main body 110 is provided with a second step 111 engaged with the first step 121 on a side edge of the main body 110 where the connection plate 120 is mounted. Through the engagement of the first step 121 and the second step 111, the stability of the connection between the connection plate 120 and the main body 110 can be ensured.

Specifically, as shown in FIG. 23 to FIG. 25, when assembling the aluminum electrolytic capacitor, a core package 1000 is first disposed in the accommodation space formed by the main body 110, and subsequently the connection plate 120 is covered on the main body 110, and laser welding is performed at a connection edge between the connection plate 120 and the main body 110.

Optionally, after the connection plate 120 is welded on the main body 110, the main body 110 and the connection plate 120 apply a certain pressure to the core package 1000.

In the embodiments of the present disclosure, optionally, the core package 1000 has an airbag structure.

According to the aluminum electrolytic capacitor described in the embodiment, through the above structure in which the connection plate 120 and the main body 110 are connected to each other to form the metallic case, a hexahedral or rectangular shell can be made smaller, achieving the effect of saving space. At the same time, it is not necessary to additionally arrange a pressing plate on the shell to apply pressure to press the core package, achieving the effect of saving costs. At the same time, it can avoid a problem of scratching the core package caused by placing the core package from an upper opening of the metallic case, and also overcome the difficulty of slightly pressing the core package by the shell.

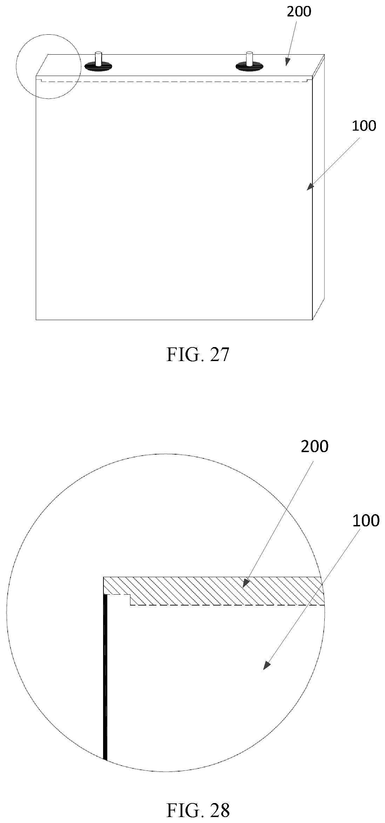

In the embodiments of the present disclosure, optionally, the metallic case 100 may be sealingly connected to the cover plate 200 through laser welding or parallel welding. As shown in FIG. 27 and FIG. 28, optionally, a connection surface between the metallic case 100 and the cover plate 200 is formed as a stepped surface at an edge of the connection surface. The metallic case 100 is disposed above the cover plate 200. Welding is performed at the connection surface of the metallic case 100 and the cover plate 200 through laser welding or parallel welding, so as to achieve the sealed connection between the two.

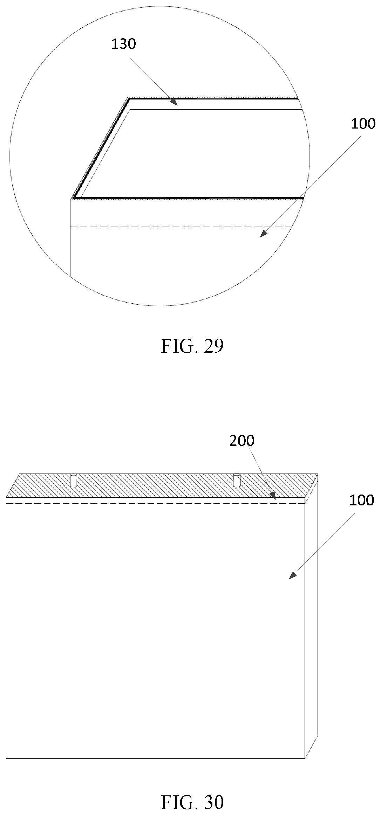

In another embodiment of the present disclosure, optionally, as shown in FIG. 1, FIG. 29 and FIG. 30, the metallic case 100 may be provided with an installation frame 130 at the top of the metallic case 100, the shape of the installation frame 130 matches that of the cover plate 200. The cover plate 200 is disposed in the installation frame 130, that is, the cover plate 200 is placed inside the metallic case 100. And then the cover plate 200 is sealingly connected to the metallic case 100 through laser welding or parallel welding.

Optionally, a height at which the cover plate 200 is disposed in the installation frame 130 is equal to a thickness of the cover plate 200.

According to the above sealing method between the metallic case 100 and the cover plate 200, effective sealing between the two can be ensured, thereby making the assembly method of the aluminum electrolytic capacitor simpler and more convenient.

It should be noted that the above sealing method between the metallic case 100 and the cover plate 200 can be applied to any one of the first embodiment to thirteenth embodiment, and examples are not given and described separately in combination with each embodiment herein.

Obviously, those skilled in the art can make various changes and variations to the present disclosure without departing from the spirit and scope of the present disclosure. In this way, if these modifications and variations of the present disclosure fall within the scope of the claims of the present disclosure and their equivalent technologies, the present disclosure is also intended to include these changes and variations.

What is described above is the preferred embodiments of the present disclosure. It should be pointed out that, for those ordinary skilled in the art, several improvements and modifications can also be made without departing from the principle of the present disclosure, and these improvements and modifications should also be construed as the protection scope of the present disclosure.

## Claims

1. An aluminum electrolytic capacitor, comprising:
a metallic case, a core package, and a cover plate covering the metallic case, the metallic case and the cover plate forming an enclosed space, and the core package being disposed in the enclosed space, wherein,
electrode terminals are connected to the core package, the cover plate has first through holes corresponding to the electrode terminals, and the electrode terminals pass through the first through holes and extend out of the cover plate; and
the aluminum electrolytic capacitor further comprises a sealing assembly disposed at each of the first through holes for sealing the first through hole.

2. The aluminum electrolytic capacitor according to claim 1, wherein the cover plate is made of a metallic material, the sealing assembly is located in each of the first through holes and provided between the cover plate and each of the electrode terminals, and the sealing assembly is made of an electrically insulating material.

3. The aluminum electrolytic capacitor according to claim 1, wherein, limiting members are provided on a first surface of the cover plate, the limiting members are in one-to-one correspondence with the first through holes, and the limiting members are sealingly connected to the cover plate;
the limiting member comprises a second through hole that is arranged coaxially with the first through hole and in communication with the first through hole, the first through hole and the second through hole form an accommodation space, the sealing assembly is disposed in the accommodation space, and each of the electrode terminals penetrates the sealing assembly and the limiting member and extends out of the limiting member; and
the first surface is a surface facing away from the enclosed space.

4. The aluminum electrolytic capacitor according to claim 3, wherein a first limiting surface is formed in the second through hole, the sealing assembly abuts against the first limiting surface, and the first limiting surface is perpendicular to an axis of each of the electrode terminals.

5. The aluminum electrolytic capacitor according to claim 4, wherein each of the first through holes has a second limiting surface parallel to the first limiting surface; and
the sealing assembly comprises a main sealing body and a pressing piece, wherein the main sealing body is connected to the first limiting surface, and the pressing piece is connected to each of the cover plate and the main sealing body at the second limiting surface, and presses the main sealing body in a direction perpendicular to the first limiting surface.

6. The aluminum electrolytic capacitor according to claim 5, wherein the second through hole comprises a first-diameter through hole and a second-diameter through hole that have different diameters, the first-diameter through hole being in communication with the first through hole and the second-diameter through hole, wherein,
a connection wall surface between an inner wall of the first-diameter through hole and an inner wall of the second-diameter through hole forms the first limiting surface, and a connection wall surface between the inner wall of the first-diameter through hole and an inner wall of the first through hole forms the second limiting surface.

7. The aluminum electrolytic capacitor according to claim 6, wherein the pressing piece is disposed in the first through hole and on a second surface of the cover plate, and abuts against the second limiting surface, the pressing piece has a third through hole at a center of the pressing piece, each of the electrode terminals is coaxial with the corresponding third through hole and passes through the third through hole and the accommodation space, and in the accommodation space, a space between the electrode terminal and the limiting member is filled with the main sealing body, wherein,
the second surface is a surface facing away from the first surface.

8. The aluminum electrolytic capacitor according to claim 7, wherein the main sealing body comprises a first sealing body and a second sealing body, wherein,
the first sealing body comprises a first cylinder that is in mating connection with the second-diameter through hole and a second cylinder that is in mating connection with a part of the first-diameter through hole;
the second sealing body comprises a third cylinder that is in mating connection with another part of the first-diameter through hole and a fourth cylinder that is in mating connection with the third through hole; and
a bottom surface of the second cylinder abuts against a top surface of the third cylinder, and each of the electrode terminals penetrates the first cylinder, the second cylinder, the third cylinder, and the fourth cylinder sequentially.

9. The aluminum electrolytic capacitor according to claim 8, wherein at least a part of the first cylinder extends out of the limiting member.

10. The aluminum electrolytic capacitor according to claim 8, wherein the first sealing body has, at its center, a first central hole, a second central hole, and a third central hole that are sequentially arranged from a top surface of the first sealing body to a bottom surface of the first sealing body, the first central hole, the second central hole, and the third central hole have sequentially increasing hole diameters and communicate with one another, wherein,
each of the electrode terminals comprises an electrode cap, the electrode cap comprises a first part that is in mating connection with the second central hole and a second part that is in mating connection with the third central hole, and a top surface of the electrode cap abuts against a connection wall surface between the first central hole and the second central hole, and a bottom surface of the electrode cap is disposed on a top surface of the second sealing body.

11. The aluminum electrolytic capacitor according to claim 10, wherein the electrode cap further comprises a first connection end and a second connection end that are each integrally connected to the electrode cap, wherein,
the first connection end extends upwards from the top surface of the electrode cap, and extends out of the first sealing body through the first central hole; and the second connection end extends downwards from the bottom surface of the electrode cap, penetrates the second sealing body, and extends out of the second sealing body.

12. The aluminum electrolytic capacitor according to claim 11, wherein a diameter of the first connection end is equal to a diameter of the second connection end, and is smaller than a diameter of the first part and a diameter of the second part.

13. The aluminum electrolytic capacitor according to claim 5, wherein the main sealing body is made of an elastic plastic material, and the pressing piece is made of a metallic material.

14. The aluminum electrolytic capacitor according to claim 13, wherein the pressing piece is connected to the cover plate through welding.

15. The aluminum electrolytic capacitor according to claim 3, wherein a shape and a size of an outer surface of the limiting member are identical to a shape and a size of the first through hole, respectively.

16. The aluminum electrolytic capacitor according to claim 7, wherein each of the electrode terminals has at least one protrusion on an outer surface of the electrode terminal, and the main sealing body has at least one recess that is in mating connection with the at least one protrusion.

17. The aluminum electrolytic capacitor according to claim 7, wherein a surface of the main sealing body in contact with the limiting member comprises a concave curved surface portion, the concave curved surface portion being formed by applying a pressing force to a corresponding position on an outer surface of the limiting member.

18. The aluminum electrolytic capacitor according to claim 2, wherein the sealing assembly is formed by calcining and melting a glass bead in each of the first through holes.

19. The aluminum electrolytic capacitor according to claim 2, wherein the sealing assembly comprises a sealant, each of the first through holes being filled with the sealant.

20. The aluminum electrolytic capacitor according to claim 19, wherein a filling groove surrounding the first through hole is provided in a first surface of the cover plate facing away from the enclosed space, the filling groove is filled with a sealant, and the sealant in the filling groove and the sealant in the first through hole are manufactured by a same process.

21. The aluminum electrolytic capacitor according to claim 20, wherein each of the electrode terminals has a protrusion on an outer surface of the electrode terminal, and the protrusion is located inside the enclosed space, wherein,
the electrode terminal is sleeved with a blocking rubber ring, the blocking rubber ring being disposed between the protrusion and the cover plate.

22. The aluminum electrolytic capacitor according to claim 1, wherein the sealing assembly comprises a connection cap that is provided on the cover plate and protrudes in a direction away from the enclosed space, wherein,
the connection cap is made of a metallic material and is sealingly connected to the cover plate, a part of the electrode terminal extending out of the cover plate is inserted into the connection cap, and the electrode terminal is connected to the connection cap through welding.

23. The aluminum electrolytic capacitor according to claim 22, wherein the cover plate is made of a metallic material, and the cover plate and the connection cap are integrally formed.

24. The aluminum electrolytic capacitor according to claim 22, wherein the electrode terminals comprise a cathode terminal, and the cover plate is made of a metallic material, wherein,
the connection cap comprises a first connection cap corresponding to the cathode terminal and sealingly welded to the cover plate.

25. The aluminum electrolytic capacitor according to claim 24, wherein the electrode terminals further comprise an anode terminal, wherein,
the connection cap further comprises a second connection cap corresponding to the anode terminal and sealingly connected to the cover plate through a glass bead; or a ceramic ring is arranged between the second connection cap and the cover plate, and the ceramic ring is sealingly welded to each of the cover plate and the second connection cap.

26. The aluminum electrolytic capacitor according to claim 25, wherein the core package comprises an anode foil, an electrolytic paper, and a cathode foil, wherein,
two anodes are electrically connected to the anode foil, and two cathodes are electrically connected to the cathode foil; and the connection cap comprises two first connection caps corresponding to the two cathodes respectively and two second connection caps corresponding to the two anodes respectively.

27. The aluminum electrolytic capacitor according to claim 1, wherein the cover plate comprises a first sub-plate made of a metallic material and a second sub-plate made of an insulating material, wherein,
the electrode terminals are provided on the first sub-plate, and the core package is provided with conductive foil strips electrically connected to the electrode terminals.

28. The aluminum electrolytic capacitor according to claim 27, wherein the electrode terminals comprise an anode terminal and a cathode terminal, wherein,
the cathode terminal is connected to the first sub-plate through welding, and the anode terminal is electrically isolated from the first sub-plate by a glass bead.

29. The aluminum electrolytic capacitor according to claim 27, wherein the electrode terminals comprise an anode terminal and a cathode terminal, wherein,
the anode terminal is connected to the first sub-plate through welding, the first sub-plate is provided with a ceramic ring surrounding the anode terminal, the ceramic ring is fixedly connected to the first sub-plate through welding, and the anode terminal is fixedly connected to a part of the first sub-plate located inside the ceramic ring through welding.

30. The aluminum electrolytic capacitor according to any one of claims 27 to 29, wherein the core package comprises an anode foil, an electrolytic paper, and a cathode foil, an anode conductive foil strip is electrically connected to the anode foil, and a cathode conductive foil strip is electrically connected to the cathode foil, wherein,
the anode conductive foil strip is electrically connected to the anode terminal of the electrode terminals, and the cathode conductive foil strip is electrically connected to the cathode terminal of the electrode terminals.

31. The aluminum electrolytic capacitor according to any one of claims 1 to 29, wherein a circuit board is provided in an interior of the enclosed space, and is flatly arranged on the cover plate, and each of the electrode terminals penetrates the circuit board and extends into one of the first through holes.

32. The aluminum electrolytic capacitor according to claim 31, wherein an insulating layer is disposed between the circuit board and the cover plate.

33. The aluminum electrolytic capacitor according to claim 31, wherein the circuit board is provided with a safety member.

34. The aluminum electrolytic capacitor according to claim 1, wherein the cover plate is made of a metallic material, and the metallic case is connected to the cover plate through laser welding or parallel welding.

35. The aluminum electrolytic capacitor according to claim 3, wherein the limiting member is connected to the cover plate through laser welding, or the limiting member and the cover plate are integrally formed.

36. The aluminum electrolytic capacitor according to claim 1, wherein the cover plate has a receiving groove in a first surface of the cover plate, wherein,
the receiving groove is filled with a sealant, the sealing assembly is located below the sealant, and each of the electrode terminals penetrates the sealant and extends out of the sealant; and
the first surface is a surface facing away from the enclosed space.

37. The aluminum electrolytic capacitor according to claim 36, wherein a top surface diameter of the receiving groove is smaller than a bottom surface diameter of the receiving groove.
